# EUROPEAN PATENT APPLICATION

(11) **EP 4 306 500 A1**
(43) Date of publication of application: **17.01.2024**
(21) Application number: 21929994.8
(22) Date of filing: 09.03.2021
(51) Int. Cl.: C05F 11/00

(54) **METHOD FOR ENHANCING THE UPTAKE OF IRON, COPPER, MANGANESE AND ZINC IN CROPS**

(71) Applicant: FERTINAGRO BIOTECH, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); FERRER GINES, María, 44195 TERUEL (ES); FUERTES DOÑATE, Carlos, 44195 TERUEL (ES); CABALLERO MOLADA, Marcos, 44195 TERUEL (ES); GUTIERREZ MARTIN, Mario, 44195 TERUEL (ES)
(74) Representative: González López-Menchero, Álvaro Luis
(86) International application number: PCT/ES2021/070170
(87) International publication number: WO 2022/189682

(57) **Abstract**

The invention relates to a method for enhancing the uptake of iron, copper, manganese and zinc by plants in crops, wherein the method consists of supplying the crop with a composition comprising erythritol, alone or in combination with one or more monosaccharides selected from mannose, glucose, galactose and xylose, which improves the total levels of the aforementioned micronutrients in the plant. Its application therefore constitutes an alternative to conventional fertilisers based on these micronutrients.

## Description

The present invention relates to a method for enhancing the uptake of iron, copper, manganese and zinc in crops.

More specifically, the invention relates to a method for enhancing the uptake of iron, copper, manganese and zinc by plants in crops, wherein the method consists of supplying the crop with a composition comprising erythritol, alone or in combination with one or more monosaccharides selected from mannose, glucose, galactose and xylose, which improves the total levels of the aforementioned micronutrients in the plant. Its application therefore constitutes an alternative to conventional fertilisers based on these micronutrients.

Although smaller amounts of micronutrients are required compared to macronutrients, they are essential for plant growth and development. Micronutrient deficiency causes, in addition to a decrease in crop yield and quality, visible symptoms of physiological stress such as dwarfism, chlorosis or the onset of necrotic spots on the leaves ("Micronutrient Deficiencies in Global Crop Production", B. J. Alloway. Heidelberg, Germany: Springer (2008), pp. 353).

At the agricultural level, when micronutrients are applied in the form of sulphur or chlorine salts, they tend to show low solubility in soil, for which reason the availability for the plants is usually reduced. In soils with basic pH, micronutrient oxidation is favoured, and micronutrients tend to form poorly soluble complexes with carbonates and hydroxides. As the acidity of the soil increases, so too often does the availability of micronutrients (Khabaz-Saberi, H., & Rengel, Z. (2010). "Aluminum, manganese, and iron tolerance improves performance of wheat genotypes in waterlogged acidic soils". Journal of Plant Nutrition and Soil Science, 173, 461-468. https://doi.org/10.1002/jpln.200900316). Nevertheless, in acid soils, metals such as iron or manganese can decrease the assimilation of phosphorus, since they precipitate with this element, yielding insoluble forms.

Numerous bacteria present in agricultural soils release organic acids and siderophores, low molecular weight organic compounds that combine with metals such as iron, copper, manganese and zinc, favouring the solubilisation of micronutrients in those soils where they are scarce (Ferreira CMH, et al., "Comparison of five bacterial strains producing siderophores with ability to chelate iron under alkaline conditions". AMB Express. 2019;9(1):78.; Duckworth OW et al., "Siderophore-Manganese (III) Interactions II. Manganite dissolution promoted by desferrioxamine B". Environ. Sci.Technol. 39: 6045-6051; Sheng X, et al., "Promotion of growth and Cu accumulation of bio-energy crop (Zea mays) by bacteria: implications for energy plant biomass production and phytoremediation. 2012. J Environ Manage. 2012 Jul 30;103:58-64.; Ghavami N, et al., "Study the Effects of Siderophore-Producing Bacteria on Zinc and Phosphorous Nutrition of Canola and Maize Plants". Communications in Soil Science and Plant analysis. 2016. 47:12.). In fact, it has been shown that siderophores excreted by rhizosphere bacteria can stimulate plant growth through an improvement in iron acquisition by plants (Masalha J., et al., "The central role of microbial activity for iron acquisition in maize and sunflower". Biol. Fertils. Soils. 2000; 30:433-439).

Without being bound by any particular theory, the present inventors believe that erythritol, alone or in combination with the aforementioned monosaccharides, favours the availability for plants of the micronutrients that solubilise the microorganisms present in the soil, such as those that release siderophores and organic acids. Therefore, when erythritol is applied to agricultural soil, microorganisms capable of releasing micronutrients such as iron, copper, manganese and zinc in forms that can be assimilated by plants.

Moreover, plants exude through the roots a considerable part of the organic compounds generated in photosynthesis (between 11 and 40%) in order to regulate the chemical composition of the rhizosphere and promote the growth of microorganisms that can provide benefits to the plant in a given ecosystem (Badri and Vivanco, "Regulation and function of root exudates", Plant, Cell and Environment 32, 666-681, 2009; Zhalnina et al., "Phosphorus activators contribute to legacy phosphorus availability in agricultural soils: A review", Science of the Total Environment 612 (2018) 522-537, 2018). Compounds present in root exudates include sugars, amino acids, organic acids, fatty acids and secondary metabolites (Bais et al., "The role of root exudates in rhizosphere interactions with plants and other organisms", Annu Rev Plant Biol. 57:233-66, 2006).

In addition to the cultivated species and its phenological stage, the composition and quantity of these exudates are mainly influenced by environmental signals, for example, the availability of nutrients in the soil. In fact, plants have mechanisms for adapting to soils with low levels of micronutrients in assimilable forms, among which is the exudation at the root level of metabolites that increase their solubilisation and acquisition and/or that modulate the composition of soil microbial communities, favouring microorganisms with the ability to solubilise them or favour absorption by the plant. These exudates include carboxylic acids, sugars, phenolic compounds, amino acids and even certain enzymes (Carvalhais et al., "Root exudation of sugars, amino acids, and organic acids by maize as affected by nitrogen, phosphorus, potassium, and iron deficiency", J. Plant Nutr. Soil Sci. 174, 3-11, 2011; Vengavasi and Pandey, "Root exudation index as a physiological marker for efficient phosphorus acquisition in soybean: an effective tool for plant breeding", Crop Pasture Sci. 67, 1096-1109, 2016).

Moreover, iron is found abundantly in agricultural soils, but under aerobic conditions, free iron in ferrous form Fe²⁺ is oxidised to ferric form Fe³⁺, forming hydroxides and oxyhydroxide polymers. Therefore, the iron present in soils, especially in those with neutral or alkaline pH, is mostly in insoluble forms, its bioavailability being low. Many of the bacteria present in soils release molecules with chelating capacity, such as siderophores, which favours the solubilisation of iron, in addition to other metals such as zinc, manganese and copper, from insoluble particles and minerals, allowing a more homogeneous distribution of these nutrients and facilitating their acquisition by the organisms present in the soil (Kramer J, et al., 2020. "Bacterial siderophores in community and host interactions". Nature Reviews. 18:152-63).

For some time now, iron acquisition strategies by plants have been well known (Romheld V., 1987. "Different strategies for iron acquisition in higher plants". Physiol. Plant. 70: 231-4). Dicotyledonous plants and non-grass monocotyledonous plants follow strategy I, characterised by a release of H⁺ for the solubilisation of ferric iron, followed by a reduction to ferrous iron by an inducible plasma membrane reductase present in root cells for subsequent iron internalisation. Strategy II, present in grasses, is characterised by the release of phytosiderophores that bind Fe³⁺ and are subsequently internalised by specific transporters.

Bacterial siderophores have a high affinity for the Fe³⁺ ion, for example, the stability constant of ferrichrome is 1029, that of ferrioxamine B 1031, that of enterobactin 1052, that of rhizobactin 1019, or la de la pyoverdine 1024, while the stability constant of mugineic acid, the most common phytosiderophore, is 1020 (Ahmed, Holstrom, 2014. "Siderophores in environmental research: roles and applications". Microbial Biotechnology. 7: 196-208).

The high affinity of bacterial siderophores for iron can make it difficult for plants of either strategy to access this form of solubilised iron. Nevertheless, plants overcome this problem, at least partially, through the release of high amounts of root exudates (sugars, organic acids, amino acids, etc.), that positively influence the availability of iron for plants (Scavino A.F., et al., 2013. Chapter 11: "The role of siderophores in plant growth-promoting bacteria". In: D.K. Maheshwari et al. (Eds.), Bacteria in Agrobiology: Crop Productivity. Springer-Verlag. 265-285).

In view of the above, the present invention is based on the aforementioned approaches in such a way that, on one hand, by regulating the transformation processes of micronutrients iron, copper, manganese and zinc in soils, erythritol and root exudates can increase their availability for plants and the efficiency of their use in agricultural soils and, on the other hand, provides an alternative to the use of conventional fertilisers based on these micronutrients.

Erythritol [(2S,3R)-butane-1,2,3,4-tetrol] is a polyol with the molecular formula C₄h₁₀O₄ naturally present in a multitude of microorganisms and plants. Erythritol has many uses in the food industry as a sweetener and has also been used as a humectant.

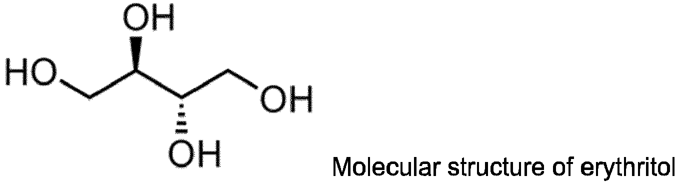

For example, international application WO2017211934A1 describes the use of a nitrate ester polyalcohol as a delayed-effect nitrogen fertiliser that makes it possible to avoid or reduce nitrate leaching. Said document uses a complex molecule with a structure similar to nitroglycerin, where this could be erythritol tetranitrate, which can be obtained by means of a condensation synthesis reaction from erythritol.

As mentioned above, the present invention relates to a method for enhancing the uptake of iron, copper, manganese and zinc by plants in crops, wherein the method consists of supplying the crop with a composition of erythritol, alone or in combination with monosaccharides selected from mannose, glucose, galactose and xylose.

In a first embodiment, the method of the invention consists of supplying the crop with an aqueous liquid composition of erythritol, wherein erythritol is present at a concentration between 2 and 450 ppm.

In a second embodiment, the method of the invention consists of supplying the crop with an aqueous liquid composition of erythritol at a concentration between 2 and 450 ppm in combination with 1 to 30% by weight of a monosaccharide selected from mannose, glucose, galactose and xylose or from 1 to 30% by weight of a combination of two or more of said monosaccharides.

In the above embodiments, the supply of the aqueous liquid composition is carried out in the crop by fertigation at a ratio of 0.1 - 50.0 kg per hectare of crop.

### Examples

### 1. Test for obtaining and identifying root exudates in the absence of micronutrients

In order to characterise in detail the response of crops to micronutrient deficiency and identifying the metabolites exuded by the roots that have the greatest influence on the dynamics of micronutrients in the soil, the applicant analysed the differential profile of exudates of two species of crops of agronomic interest, maize and tomato, in the absence of micronutrients. Next, the test to determine the root exudates emitted in the absence of micronutrients is briefly described.

The method, similar to that used by other authors (Naveed et al., 2017, "Plant exudates may stabilize or weaken soil depending on species, origin and time", European Journal of Soil Science) was the same for both maize (variety LG 34.90) and tomato (variety Agora Hybrid F1) seeds. The seeds were superficially sterilised by washing for 5 minutes with 96% ethanol, followed by 10 minutes in 5% bleach. Next, the seeds were extensively washed and allowed to hydrate in sterile MilliQ water for 4 hours. For germination, the seeds were placed on a filter paper bed moistened with sterile MilliQ water. The seeds were left to germinate in the dark for 4 days, after which the seedlings were arranged in hydroponic grow trays, dipping the roots in standard Hoagland nutrient solution. Twelve plants were placed in each tray, three trays (each one corresponding to a biological replicate) were being intended for control treatment and the other three for that of the absence of micronutrients. The plants grew with a temperature and photoperiod of 25°C and 16 h light/22°C and 8 h darkness and a light intensity of 4,000 lux on the surface.

The nutrient solution was replaced by a fresh solution every three days and was kept aerated at all times by means of bubble probes. After 10 days of growth, plants were subjected to micronutrient depletion treatment (iron -Fe-, copper -Cu-, manganese - Mn- and zinc -Zn-). To that end, three trays were incubated for three days with modified Hoagland solution without Fe, Cu, Mn and Zn, incubating the three remaining trays with complete solution. After the incubation is over, root exudates were obtained.

The plants were carefully removed from the grow trays and washed with abundant water, applying a final wash with distilled water. The plants corresponding to each tray were arranged in wide-necked flasks containing 200 ml of MilliQ water, leaving the roots immersed in the water. The plants were incubated in the flasks for 6 h. Subsequently, the plants were removed and insoluble material was removed from the solution by filtering with 0.20 µm filters. The filtrate was deep-frozen in liquid nitrogen and lyophilised. The dry material obtained was weighed and analysed by gas-mass chromatography after derivatisation with methoxyamine and N-methyl-(trimethylsilyltrifluoroacetamide).

Table 1 shows the metabolites exuded by the plants and their ratios in conditions of absence of micronutrients Fe, Cu, Mn and Zn with respect to control conditions.

**Table 1**

| Increase in metabolites emitted in the absence of micronutrients. Micronutrient / micronutrient ratio | | | |
|---|---|---|---|
| Maize | | Tomato | |
| Erythritol | 4.80 | Erythritol | 12.03 |
| Glutamic acid | 4.26 | Mannose | 8.26 |
| Tartaric acid | 4.05 | Aspartic acid | 7.75 |
| Mannose | 3.70 | Succinic acid | 7.21 |
| Malic acid | 3.65 | Galactose | 5.60 |
| Aspartic acid | 3.48 | Glutamine | 5.50 |
| Glycerol | 3.26 | Glucose | 5.45 |
| Glucose | 3.17 | Leucine | 4.12 |
| Oxaloacetic acid | 2.84 | Putrescine | 3.84 |
| γ-aminobutyric acid | 2.70 | Glycerol | 3.65 |
| Xylose | 2.65 | Myoinositol | 3.40 |
| Galactose | 2.60 | Xylose | 3.33 |
| Isoleucine | 2.39 | γ-aminobutyric acid | 3.31 |
| Leucine | 2.33 | Alanine | 3.19 |
| Thyrosine | 2.22 | Arabinose | 3.00 |
| Arabinose | 2.05 | Lactic acid | 2.76 |
| Glycine | 1.90 | Palmitic acid | 2.48 |

Next, the effect of soil application of these metabolites detected in the exudates of both crops on tomato plant growth was studied. Each of the metabolites was applied separately at a dose of 100 g/ha in a pot with 3 kg of soil, tomato plants were sown (4 pots per treatment with one plant per pot) and the effect on their dry weight was observed at 10 weeks. The effect of the metabolites was compared with a negative control (no treatment) and a positive control with a fertiliser based on chelated micronutrients (4.5% Fe chelated with EDDHA, 0.5% Cu chelated with EDTA, 2.0% Mn chelated with EDTA and 0.6% Zn chelated with EDTA) at a ratio of 1 kg/ha. The soil came from an agricultural soil with adverse characteristics for the availability of micronutrients Fe, Cu, Mn or Zn for crops. The analysis of the soil determined that it had a loamy-sandy texture, basic pH (8.4), 0.8% organic matter and a content of assimilable micronutrients of 0.41 ppm of Fe, 0.01 ppm of Cu, 0.13 ppm of Mn and 0.04 ppm of Zn, considered a very low level of this element for agricultural practices. These levels of assimilable micronutrients correspond to 1.6 kg of Fe per hectare (considering 30 centimeters of arable soil and an average density of 1,300 kg/m³, the mass per hectare would be approximately 3,900 tonnes), 0.5 kg of Mn/ha, 0.04 kg of Cu/ha and 0.16 kg of Zn/ha. The total level of these micronutrients in this soil, including those not available to plants, was higher than 256.5 ppm (1,000 kg/ha) in the cases of Fe and Mn and higher than 25.7 ppm (100 kg/ha) in the cases of Zn and Cu.

As can be observed in Table 2, some of the selected metabolites improve tomato growth to varying degrees.

**Table 2**

| Dry biomass of tomato plants at 10 weeks of growth | | |
|---|---|---|
| Treatment | Dry weight (g) | Standard error |
| Control - | 1.19 | ± 0.04 |
| Erythritol | 1.70 | ± 0.06 |
| Mannose | 1.55 | ± 0.03 |
| Aspartic acid | 1.48 | ± 0.05 |
| Succinic acid | 1.21 | ± 0.05 |
| Galactose | 1.49 | ± 0.04 |
| Glutamine | 1.43 | ± 0.07 |
| Glucose | 1.34 | ± 0.06 |
| Leucine | 1.30 | ± 0.05 |
| Putrescine | 1.18 | ± 0.08 |
| Glycerol | 1.20 | ± 0.05 |
| Myoinositol | 1.17 | ± 0.06 |
| Xylose | 1.28 | ± 0.04 |
| γ-aminobutyric acid | 1.23 | ± 0.06 |
| Alanine | 1.27 | ± 0.04 |
| Arabinose | 1.25 | ± 0.05 |
| Lactic acid | 1.19 | ± 0.03 |
| Palmitic acid | 1.15 | ± 0.07 |
| Glutamic acid | 1.26 | ± 0.04 |
| Tartaric acid | 1.17 | ± 0.03 |
| Malic acid | 1.18 | ± 0.06 |
| Oxaloacetic acid | 1.24 | ± 0.06 |
| Isoleucine | 1.24 | ± 0.05 |
| Thyrosine | 1.21 | ± 0.07 |
| Glycine | 1.19 | ± 0.03 |
| Chelated micronutrients | 1.76 | ± 0.05 |

As can be observed in the table above, the results indicate that erythritol is the metabolite that improves tomato growth to a greater extent, achieving a result similar to that obtained with treatment with chelated micronutrients.

### 2. Evaluation of the effect of various doses of erythritol on tomato plant growth in a soil poor in micronutrients

Next, the range of effectiveness of erythritol was studied by applying different doses to the same soil used in trial 1. Likewise, since certain microorganisms, such as lactic acid bacteria, produce erythritol naturally, the effect of applying extracts of microorganisms *Oenococcus kitaharae* and *Oenococcus oeni* was studied. To grow both bacteria, MRS culture medium (Man, Rogosa, Sharp. 1960. "A medium for the cultivation of Lactobacilli", J App Bact. 23. 130-135) was used, incubating at 30°C for 24-72 h. Subsequently, the cells were lysed by ultrasound and separated from the medium by centrifugation to obtain the bacterial extracts. To determine erythritol concentration, the supernatant was filtered through a 0.2 µm filter and high performance liquid chromatography (HPLC) equipment was used. A concentration of 450 ppm was determined in the O. *kitaharae* extract and 20 ppm in the *O.oeni* extract.

Different doses of erythritol and microbial extracts (undiluted and 1:10 dilution) were applied in a pot with 3 kg of soil, tomato plants were sown (4 pots per treatment with one plant per pot) and the effect on their dry weight was observed at 10 weeks (Table 3). The effect of the treatments was compared with a negative control (no treatment) and a positive control with a fertiliser based on chelated micronutrients (4.5% Fe chelated with EDDHA, 0.5% Cu chelated with EDTA, 2.0% Mn chelated with EDTA and 0.6% Zn chelated with EDTA) at a ratio of 1 kg/ha.

**Table 3**

| Dry biomass of tomato plants at 10 weeks of growth | | |
|---|---|---|
| Treatment | Dry weight (g) | Standard error |
| Control - | 1.25 | ± 0.07 |
| Erythritol 0.1 mg/ha | 1.27 | ± 0.04 |
| Erythritol 0.5 mg/ha | 1.31 | ± 0.02 |
| Erythritol 1 mg/ha | 1.44 | ± 0.06 |
| Erythritol 2 mg/ha | 1.56 | ± 0.05 |
| Erythritol 10 mg/ha | 1.65 | ± 0.04 |
| Erythritol 50 mg/ha | 1.70 | ± 0.06 |
| Erythritol 100 mg/ha | 1.71 | ± 0.07 |
| Erythritol 200 mg/ha | 1.74 | ± 0.05 |
| Erythritol 450 mg/ha | 1.72 | ± 0.04 |
| Erythritol 1.0 g/ha | 1.69 | ± 0.06 |
| Erythritol 10.0 g/ha | 1.75 | ± 0.05 |
| Erythritol 100.0 g/ha | 1.73 | ± 0.05 |
| *O. kitaharae* extract (450 ppm erythritol) 1 kg/ha | 1.78 | ± 0.05 |
| *O. kitaharae* extract diluted 1:10 (45 ppm erythritol) 1 kg/ha | 1.73 | ± 0.04 |
| *O. oeni* extract (20 ppm erythritol) 1 kg/ha | 1.71 | ± 0.03 |
| *O. oeni* extract diluted 1:10 (2 ppm erythritol) 1 kg/ha | 1.60 | ± 0.05 |
| Chelated micronutrients | 1.78 | ± 0.04 |

As can be seen from the table above, the trial showed that, with doses below 1 mg/ha of erythritol, there are no differences with respect to the control, while with doses between 10 and 50 mg/ha, the maximum effect on tomato plant growth is achieved in soil with micronutrient deficiencies, comparable to those obtained with the dose of 100 g/ha and with the application of chelated micronutrients. The application of O. *kitaharae* microbial extracts also shows a positive effect on plant growth, being obtained both with the undiluted extract (450 ppm erythritol) and with the diluted extract (45 ppm erythritol), an effect similar to that obtained with the application of chelated micronutrients. With the undiluted O.oeni extract (20 ppm erythritol), growth in tomato plants comparable to that obtained with the product based on chelated micronutrients is also achieved, while with the diluted O.oeni extract, with 2 ppm of erythritol, tomato plant growth is similar to that obtained with 2 mg/ha of pure erythritol.

### 3. Verification of erythritol as an enhancer of micronutrients that can be assimilated by plants and of the mediation of soil microorganisms.

To verify that the effect of erythritol is mediated by microorganisms present in the soil, the effect of the application of erythritol and O. *kitaharae* microbial extract in the soil used in trial 1 after being sterilised (free of microorganisms, Soilₛₜₑ). The soil was sterilised by fumigation with chloroform.

Likewise, the effect of the application of other metabolites not present in the root exudates identified in the plants subjected to the micronutrient depletion treatment was analysed (Table 1), in order to verify that the effect of erythritol is specific and is not explained by the simple input of carbon sources to the soil. Specifically, another sugar (sucrose) and two polyols (sorbitol and xylitol) were applied.

The treatments were applied to a pot with 3 kg of soil, tomato plants were sown (4 pots per treatment with one plant per pot) and the effect on their dry weight was observed at 10 weeks (Table 4). The effect of the treatments was compared with a negative control (no treatment) and a positive control with a fertiliser based on chelated micronutrients (4.5% Fe chelated with EDDHA, 0.5% Cu chelated with EDTA, 2.0% Mn chelated with EDTA and 0.6% Zn chelated with EDTA) at a ratio of 1 kg/ha.

**Table 4**

| Dry biomass of tomato plants at 10 weeks of growth | | |
|---|---|---|
| Treatment | Dry weight (g) | Standard error |
| Control - | 1.21 | ± 0.04 |
| Erythritol 45 mg/ha | 1.74 | ± 0.05 |
| *O. kitaharae* extract diluted 1:10 (45 ppm erythritol) 1 kg/ha | 1.76 | ± 0.06 |
| Chelated micronutrients | 1.76 | ± 0.07 |
| Sucrose 45 mg/ha | 1.28 | ± 0.04 |
| Sorbitol 45 mg/ha | 1.17 | ± 0.03 |
| Xylitol 45 mg/ha | 1.19 | ± 0.05 |
| Soilₛₜₑ | 1.11 | ± 0.07 |
| Soilₛₜₑ + erythritol 45 mg/ha | 1.09 | ± 0.05 |
| Soilₛₜₑ + *O*. *kitaharae* extract diluted 1:10 (45 ppm erythritol) 1 kg/ha | 1.13 | ± 0.05 |
| Soilₛₜₑ + chelated micronutrients | 1.60 | ± 0.06 |

As shown in Table 4, neither erythritol nor O. *kitaharae* extract containing erythritol had an effect on the sterilised soil, unlike treatment with chelated micronutrients, which indicates that the effect of erythritol depends on the microorganisms present in the soil.

Moreover, sucrose, sorbitol and xylitol do not show a positive effect on tomato growth in soil with micronutrient deficiency, unlike erythritol, which suggests that the effect of erythritol is specific and is not due to the effect of the input of a carbon source to the soil.

### 4. Application of the method of the invention

The following three liquid compositions were prepared:
- A: a liquid composition with 20 ppm erythritol.
- B: a liquid combination between 30 and 80% by weight of liquid composition with 20 ppm erythritol and between 1 and 30% mannose, between 1 and 30% glucose;
- B: a liquid combination between 30 and 80% by weight of liquid composition with 20 ppm erythritol and between 1 and 30% galactose, between 1 and 30% xylose.

These compositions (A, B, C) were tested in field trials with maize and tomato plants, being compared with a negative control (untreated) and with a positive control of fertilisation with chelated micronutrients (D). The doses and mode of application were as follows:
- For the maize:
   - A: 10.0 kg/ha via fertigation.
   - B: 10.0 kg/ha via fertigation.
   - C: 10.0 kg/ha via fertigation.
   - D: Chelated micronutrients (4.5% Fe chelated with EDDHA, 0.5% Cu chelated with EDTA, 2.0% Mn chelated with EDTA and 0.6% Zn chelated with EDTA) at a dose of 10 kg/ha via fertigation.
- For the tomato:
   - A: 10.0 kg/ha via fertigation.
   - B: 10.0 kg/ha via fertigation.
   - C: 10.0 kg/ha via fertigation.
   - D: Chelated micronutrients (4.5% Fe chelated with EDDHA, 0.5% Cu chelated with EDTA, 2.0% Mn chelated with EDTA and 0.6% Zn chelated with EDTA) at a dose of 10 kg/ha via fertigation.

The treatments considerably improved the yield and micronutrient content of maize (Tables 5-9), as well as tomato (Tables 10-14).

**Table 5**

| Maize yield (Tn grain/ha) | |
|---|---|
| Control | 8.59 |
| A | 9.22 |
| B | 9.66 |
| C | 9.31 |
| D | 9.59 |

**Table 6**

| Iron concentration in maize (ppm) | |
|---|---|
| Control | 124.2 |
| A | 175.7 |
| B | 211.4 |
| C | 179.0 |
| D | 205.8 |

**Table 7**

| Total copper concentration in maize (ppm) | |
|---|---|
| Control | 3.7 |
| A | 7.5 |
| B | 11.9 |
| C | 8.3 |
| D | 12.1 |

**Table 8**

| Manganese concentration in maize (ppm) | |
|---|---|
| Control | 48.5 |
| A | 65.1 |
| B | 68.7 |
| C | 66.9 |
| D | 67.6 |

**Table 9**

| Zinc concentration in maize (ppm) | |
|---|---|
| Control | 14.3 |
| A | 22.0 |
| B | 25.8 |
| C | 22.7 |
| D | 25.4 |

**Table 10**

| Tomato yield (Tn/ha) | |
|---|---|
| Control | 42.30 |
| A | 46.33 |
| B | 47.15 |
| C | 46.42 |
| D | 47.09 |

**Table 11**

| Iron concentration in tomato (ppm). 2nd cluster | |
|---|---|
| Control | 61.1 |
| A | 74.5 |
| B | 83.4 |
| C | 75.7 |
| D | 83.0 |

**Table 12**

| Copper concentration in tomato (ppm). 2nd cluster | |
|---|---|
| Control | 5.3 |
| A | 11.4 |
| B | 14.2 |
| C | 11.8 |
| D | 14.0 |

**Table 13**

| Manganese concentration in tomato (ppm). 2nd cluster | |
|---|---|
| Control | 64.9 |
| A | 72.3 |
| B | 75.8 |
| C | 73.2 |
| D | 77.5 |

**Table 14**

| Zinc concentration in tomato (ppm). 2nd cluster | |
|---|---|
| Control | 58.6 |
| A | 77.5 |
| B | 87.60 |
| C | 77.9 |
| D | 84.8 |

In order to determine if the increase in the micronutrient content in the treatments studied is due to an increase in the availability of their assimilable forms for plants, Fe, Cu, Mn and Zn balances were performed in trials with maize plants.

In trial 4, the same agricultural soil was used as in trial 1, with a content of assimilable micronutrients of 0.41 ppm of Fe, 0.01 ppm of Cu, 0.13 ppm of Mn and 0.04 ppm of Zn. These levels of assimilable micronutrients correspond to 1.6 kg of Fe/ha, 0.5 kg of Mn/ha, 0.04 kg of Cu/ha and 0.16 kg of Zn/ha. The total level of micronutrients in this soil, including those not available to plants, was higher than 256.5 ppm (1,000 kg/ha) in the cases of Fe and Mn and higher than 25.7 ppm (100 kg/ha) in the cases of Zn and Cu.

In treatments A, B and C, no micronutrients were provided, since none of the molecules used in said treatments contain them.

Taking into account the dry weight of the biomass of maize plants (see Tables 15-18) and the concentration of micronutrients in the plants (Tables 6-9), the kg of each micronutrient present in the biomass obtained per hectare can be calculated. As can be seen, the amount of each micronutrient in the dry biomass is higher in all cases than the amount of these initially available in the soil. Therefore, the increase in the micronutrient content of the plants is necessarily due to an increase in the availability of their assimilable forms for the plants thanks to the fertiliser composition with the assimilable micronutrient enhancer.

**Table 15**

| Iron balance in maize plant. | | |
|---|---|---|
| | Biomass dry weight (Tn/ha) | kg of Fe in dry biomass/ha |
| Control | 9.12 | 1.13 |
| A | 9.65 | 1.70 |
| B | 9.88 | 2.09 |
| C | 9.69 | 1.73 |
| D | 9.91 | 2.04 |

**Table 16**

| Copper balance in maize plant. | | |
|---|---|---|
| | Biomass dry weight (Tn/ha) | kg of Cu in dry biomass/ha |
| Control | 9.12 | 0.03 |
| A | 9.65 | 0.07 |
| B | 9.88 | 0.12 |
| C | 9.69 | 0.08 |
| D | 9.91 | 0.12 |

**Table 17**

| Manganese balance in maize plant. | | |
|---|---|---|
| | Biomass dry weight (Tn/ha) | kg of Mn in dry biomass/ha |
| Control | 9.12 | 0.44 |
| A | 9.65 | 0.63 |
| B | 9.88 | 0.68 |
| C | 9.69 | 0.65 |
| D | 9.91 | 0.67 |

**Table 18**

| Zinc balance in maize plant. | | |
|---|---|---|
| | Biomass dry weight (Tn/ha) | kg of Zn in dry biomass/ha |
| Control | 9.12 | 0.13 |
| A | 9.65 | 0.21 |
| B | 9.88 | 0.25 |
| C | 9.69 | 0.22 |
| D | 9.91 | 0.25 |

## Claims

1. A method for enhancing the uptake of iron, copper, manganese and zinc by plants in crops, wherein the method consists of supplying the crop with a liquid composition of erythritol, alone or in combination with one or more monosaccharides selected from mannose, glucose, galactose and xylose.

2. The method for enhancing the uptake of iron, copper, manganese and zinc by plants in crops according to claim 1, wherein, in the aqueous liquid composition of erythritol alone, erythritol is present at a concentration between 2 and 450 ppm.

3. The method for enhancing the uptake of iron, copper, manganese and zinc by plants in crops according to claim 1, wherein, in the aqueous liquid composition of erythritol in combination with one or more monosaccharides, erythritol is present at a concentration between 2 and 450 ppm and the one or more monosaccharides at a concentration of 1 to 30% by weight.

4. The method for enhancing the uptake of iron, copper, manganese and zinc by plants in crops according to any of the preceding claims, wherein the supply of the aqueous liquid composition is carried out in the crop by fertigation at a ratio of 0.1 - 50.0 kg per hectare of crop.
